# EUROPÄISCHE PATENTANMELDUNG

(11) **EP 4 119 328 A1**
(43) Veröffentlichungstag der Anmeldung: **18.01.2023**
(21) Anmeldenummer: 21184958.3
(22) Anmeldetag: 12.07.2021
(51) Int. Cl.: B29C 64/124, B29C 64/232, B29C 64/393, B33Y 10/00, B33Y 30/00, B33Y 50/02, G06N 3/00

(54) **VORSTEUERUNG DER ABZUGSBEWEGUNG IM 3D-DRUCK MITTELS EINES NEURONALEN NETZES**

(71) Anmelder: DENTSPLY SIRONA Inc., York, PA 17401 (US); Sirona Dental Systems GmbH, 64625 Bensheim (DE)
(72) Erfinder: Stahl, Christian, 64625 Bensheim (DE)
(74) Vertreter: Özer, Alpdeniz

(57) **Zusammenfassung**

Die vorliegende Erfindung betrifft einen 3D Drucker (1) umfassend eine Wanne (1.1) mit einem mindestens teilweise transparenten Boden (1.2) zur Aufnahme von flüssigem photoreaktivem Harz (1.3) zur Herstellung eines festen Bauteils; eine Bauplattform (1.8) zum Halten und schichtweisen Herausziehen des Bauteils aus der Wanne (1.1); einen Projektor (1.4) zum Projizieren der Schichtgeometrie auf den transparenten Boden (1.2); einen Transportapparat (1.5) zum mindestens Abwärts- und Aufwärtsbewegen der Bauplattform (1.8) in der Wanne (1.1); und eine Steuerungsvorrichtung zum Steuern des Projektors (1.4) und des Transportapparats (1.5), gekennzeichnet dadurch, dass die Steuerungsvorrichtung die Abzugsbewegung der Bauplattform im 3D-Drucker mittels eines neuronalen Netzes optimal vorsteuert.

## Beschreibung

### TECHNISCHES GEBIET DER ERFINDUNG

Die vorliegende Erfindung bezieht sich auf additive Herstellungsverfahren, insbesondere 3D-Druckverfahren von Bauteilen und 3D Drucker.

### HINTERGRUND DER ERFINDUNG

Beim 3D-Druck wird in bestimmten Verfahren wie z.B. SLA oder DLP ein Bauteil erzeugt, indem photoreaktives Harz schichtweise ausgehärtet wird. Dabei wird in gängigen Varianten der Verfahren die Belichtung von unten durch einen lichtdurchlässigen transparenten Boden in eine Wanne hinein vollzogen. Die ausgehärtete Schicht muss in der Regel nach der Belichtung mechanisch vom Boden getrennt werden. Die dabei auftretenden Kräfte hängen u. a. von der genauen Ausgestaltung der Abzugsbewegung (Richtung, Geschwindigkeit usw.) ab. Diese Kräfte müssen einerseits möglichst geringgehalten werden, um Schäden am Bauteil zu vermeiden, andererseits bedeutet ein zu vorsichtiges Ablösen einen unnötig langsamen Druck. Wenn der Zeitpunkt des Ablösens des Bauteils nicht detektiert werden kann, dann muss immer unnötiger Weg verfahren werden, um ein Ablösen sicherstellen zu können, wodurch der Prozess noch langsamer wird.

In bekannten Systemen, die rein auf Vorsteuerung der Abzugsbewegung basieren, muss eine auf Erfahrungswerten beruhende konservative Abzugsbewegung gewählt werden. Je nach Komplexität des dahinterliegenden Modells ist die Abzugsbewegung mehr oder weniger unnötig langsam. In Systemen, in denen die Abzugsbewegung *aktiv gesteuert* wird (d.h. aktuelles Kraftsignal legt Abzugsgeschwindigkeit fest und detektiert den Zeitpunkt der Ablösung des Bauteils) kann immer eine (annähernd) maximale Geschwindigkeit für ein gesetztes Kraftmaximum und eine optimale Abzugshöhe gefahren werden.

### OFFENBARUNG DER ERFINDUNG

Ziel der vorliegenden Erfindung ist die Bereitstellung eines 3D Druckers, mit dem ein optimierter Ablöseprozess mittels eines neuronalen Netzes berechnet werden kann, z.B. die Druckzeit bei gleichzeitigem Schutz des Bauteils optimiert werden kann.

Dieses Ziel wird durch den 3D Drucker nach Anspruch 1 und das neuronale Netz nach Anspruch 9 erreicht. Die Gegenstände der abhängigen Ansprüche beziehen sich auf Weiterentwicklungen sowie bevorzugte Ausführungsformen.

Der erfindungsgemäße 3D Drucker umfasst eine Wanne mit einem mindestens teilweise transparenten Boden zur Aufnahme von flüssigem photoreaktivem Harz zur Herstellung eines festen Bauteils; eine Bauplattform zum Halten und schichtweisen Herausziehen des Bauteils aus der Wanne; einen Projektor zum Projizieren der Schichtgeometrie auf den transparenten Boden; einen Transportapparat zum mindestens Abwärts- und Aufwärtsbewegen bzw. auch zum Seitwärtsbewegen der Bauplattform in der Wanne; und eine Steuerungsvorrichtung zum Steuern des Projektors und des Transportapparats, wobei die Steuerungsvorrichtung die Abzugsbewegung der Bauplattform im 3D-Druck mittels eines neuronalen Netzes optimal vorsteuert.

Das erfindungsgemäße neuronale Netz dient zur Steuerung des 3D Druckers. Das neuronale Netz kann durch eine Hardware und/oder Software implementiert werden. Das neuronale Netz kann mit dem 3D Drucker integriert bereitgestellt werden. Alternativ kann das neuronale Netz separat bereitgestellt werden zum Nachrüsten des 3D Druckers. Der 3D Drucker kann mit dem neuronalen Netz lokal oder über ein Netzwerk verbunden werden. bzw. verbindbar sein.

Ein wesentliches Merkmal der Erfindung ist, dass das erfindungsgemäße neuronale Netz einerseits eine Alternative zur *aktiven Regelung*/*Steuerung* ist und andererseits gegenüber der aktiven Steuerung den Vorteil bietet, dass weitere Optimierungsmodi zusätzlich zur "maximale Geschwindigkeit bei gegebener Maximalkraft" ermöglicht werden, z.B. minimale Kraft bei *gegebener* maximaler Bewegungszeit.

Das neuronale Netz kann vorzugsweise den Grad der Anhaftung des Bauteils auf Basis der Eigenschaften des flüssigen photoreaktiven Harzes und/oder der in der jeweils belichteten Schicht ausgehärteten Fläche und/oder der in der zuletzt ausgehärteten Fläche eingebrachten Energieverteilung berechnen und die Abzugsbewegung der Bauplattform im 3D-Druck entsprechend vorsteuern.

Das neuronale Netz kann vorzugsweise für den Grad der Anhaftung ein Kraftprofil berechnen, wobei die Kraft vorzugsweise in Abhängigkeit des zurückgelegten Hubes und/oder der Zeit angegeben wird, und die Abzugsbewegung der Bauplattform im 3D-Druck entsprechend vorsteuern.

Das neuronale Netz kann vorzugsweise weitere Freiheitsgrade wie z.B. eine zusätzliche Bewegungsachse zur horizontalen Bewegung der Bauplattform im 3D Drucker, z.B. für den Grad der Anhaftung bzw. das Kraftprofil, berücksichtigen. Dadurch kann die Abzugsrichtung optimiert werden.

In einer weiteren bevorzugten Ausführungsform können Hilfsstrukturen an der Bauplattform, die nicht zum Bauteil gehören, hinsichtlich einer optimalen Abzugsbewegung und Abzugsrichtung bestimmt werden.

In einer weiteren bevorzugten Ausführungsform werden die Schichten des Bauteils in mehrere Belichtungen aufgeteilt zur optimalen Steuerung der Abzugskraft und der Abzugsbewegung.

Das neuronale Netz wird mit Daten, die den Zeitpunkt des Ablösens eines Bauteils und in derjenigen Schicht auftretenden Kräfte beim Ablösen sowie mindestens einer der folgenden Kenngrößen: Eigenschaften des flüssigen photoreaktiven Harzes, der in der jeweils belichteten Schicht ausgehärteten Fläche, der in der zuletzt ausgehärteten Fläche eingebrachten Energieverteilung umfassen trainiert um das neuronale Netz die Vorhersage der mit diesem photoreaktiven Harz auftretenden Kräfte und Ablösezeitpunkte zu ermöglichen so dass das neuronale Netz dazu benutzt werden kann, die Abzugsbewegung zu optimieren. Unterschiedliche Optimierungs-Kriterien (s. oben) können benutzt werden.

Das neuronale Netz kann vorab mit einem 3D Drucker, z.B. einem Laborgerät, trainiert werden, das Kraftmessungen mittels Kraftsensoren durchführen kann. Eine oder mehrere Kraftsensoren können in dem Transportapparat an der Bauplattform angebracht werden um die darauf wirkenden horizontalen und/oder vertikalen Kräfte zu messen. Das trainierte neuronale Netz kann zur Steuerung eines 3D Druckers, z.B. in einem Seriengerät, verwendet werden, das nicht zwingend eine Kraftmessungsvorrichtung aufweist. Das Seriengerät kann auch mit Kraftmessungsvorrichtungen ausgestattet werden, sodass unter anderem kundenseitig Trainingsdaten gesammelt werden können. Die Trainingsdaten können über eine Cloud zum Trainieren von an das Netz angeschlossenen 3D Druckern zur Verfügung gestellt werden. Kraftmessungsvorrichtungen können auch bei dem Seriengerät für die Sicherheit des 3D Druckjobs verwendet werden.

Eine vorteilhafte Wirkung der Erfindung ist, dass durch das neuronales Netz auf die optimale Abzugsbewegung für einen spezifischen 3D Drucker und/oder einen spezifischen 3D Druckauftrag trainiert werden kann. Somit kann sowohl der Betrieb des 3D Druckers als auch ein bestimmter 3D-Druck-Job hinsichtlich Geschwindigkeit und/oder Sicherheit optimal durchgeführt werden.

### KURZBESCHREIBUNG DER ZEICHNUNG

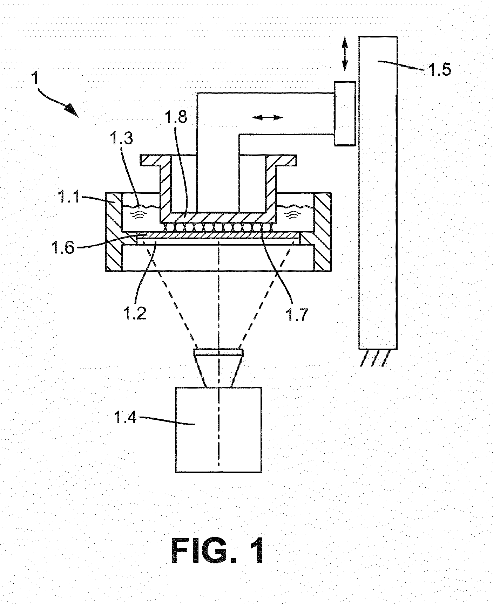

In der nachfolgenden Beschreibung wird die vorliegende Erfindung anhand von Ausführungsbeispielen unter Bezugnahme auf die Zeichnung näher erläutert, wobei Abb.1 ― zeigt eine schematische Teilansicht eines 3D Druckers nach einer Ausführungsform der Erfindung.

Die in der Zeichnung gezeigten Referenznummern bezeichnen die unten aufgeführten Elemente, auf die in der nachfolgenden Beschreibung der beispielhaften Ausführungsformen Bezug genommen wird.
- 1: 3D Drucker
- 1.1: Wanne
- 1.2: Transparenter Boden
- 1.3: Photoreaktives Harz
- 1.4: Projektor
- 1.5: Transportapparat
- 1.6: Folie
- 1.7: Schicht
- 1.8: Bauplattform

Wie in Abb.l gezeigt umfasst der 3D Drucker (1) eine Wanne (1.1) mit einem mindestens teilweise transparenten Boden (1.2) zur Aufnahme von flüssigem photoreaktivem Harz (1.3) zur Herstellung eines festen Bauteils; eine Bauplattform (1.8) zum Halten und schichtweisen Herausziehen des Bauteils aus der Wanne (1.1); einen Projektor (1.4) zum Projizieren der Schichtgeometrie auf den transparenten Boden (1.2); einen Transportapparat (1.5) zum mindestens Abwärts- und Aufwärtsbewegen bzw. auch zum Seitwärtsbewegen der Bauplattform (1.8) in der Wanne (1.1); und eine Steuerungsvorrichtung zum Steuern des Projektors (1.4) und des Transportapparats (1.5). Die Abzugsbewegung der Bauplattform im 3D-Druck wird durch die Steuerungsvorrichtung mittels eines neuronalen Netzes (nicht gezeigt) optimal vorgesteuert.

In einer bevorzugten Ausführungsform bestimmt das neuronale Netz den Grad der Anhaftung des Bauteils am transparenten Boden (1.2) bzw. an der Folie (1.6) durch mindestens eine der folgenden Kenngrößen: (i) Eigenschaften des flüssigen photoreaktiven Harzes (1.3), (ii) der in der zuletzt belichteten Schicht (1.7) ausgehärteten Fläche, (iii) der in der zuletzt ausgehärteten Fläche eingebrachten Energieverteilung. Die Abzugsbewegung der Bauplattform im 3D-Druck wird durch die Steuerungsvorrichtung mittels des neuronalen Netzes auf Basis des bestimmten Grades der Anhaftung vorgesteuert. Durch die Verwendung der Informationen in (i) bis (iii) kann die Abzugsbewegung entsprechend des verwendeten Materials und des aktuellen Schrittes des Druckprozesses effizient durchgeführt werden. Die Beschaffenheit oder der Typ des flüssigen photoreaktiven Harzes (1.3), der mit dem 3D Drucker (1) verwendet wird, kann bereits in einem Speicher abrufbar hinterlegt werden. Weil die Verwendung von unterschiedlichen photoreaktiven Harzen (1.3) auch erdenklich ist, kann die Information über die Beschaffenheit oder den Typ des flüssigen photoreaktiven Harzes (1.3), das aktuell benutzt wird, auch vorzugsweise über eine Benutzeroberfläche (nicht gezeigt) vom Benutzer selbst eingegeben werden, damit das neuronale Netz das aktuell benutzte Material berücksichtigen kann. Die Benutzeroberfläche befindet sich vorzugsweise auf dem 3D Drucker (1). Alternativ kann sie auch in einem separaten Gerät (z.B. Rechner, Tablet usw.) vorhanden sein, das mit dem neuronalen Netz und/oder dem 3D Drucker in Verbindung steht.

In einer weiteren bevorzugten Ausführungsform berechnet das neuronale Netz bezüglich des Grads der Anhaftung ein Kraftprofil. Die Kraft wird in Abhängigkeit des zurückgelegten Hubes und/oder der Zeit angegeben. Die Abzugsbewegung der Bauplattform im 3D-Drucker wird durch die Steuerungsvorrichtung mittels des neuronalen Netzes zusätzlich auf Basis des berechneten Kraftprofils vorgesteuert. Durch die Verwendung des Kraftprofils kann die Abzugsbewegung effizient durchführt werden.

Der Transportapparat (1.5) hat mindestens eine vertikale Bewegungsachse für die Abwärts- und Aufwärtsbewegung der Bauplattform (1.2) in der Wanne (1.1). In einer weiteren bevorzugten Ausführungsform hat der Transportapparat (1.5) vorzugsweise zusätzlich eine horizontale Bewegungsachse für die Seitwärtsbewegung der Bauplattform (1.2) in der Wanne (1.3). Die Bewegungsachsen umfassen jeweils einen Motor und eine mit der Bauplattform (1.3) gekoppelte Gewindestange. Das neuronale Netz berücksichtigt für die Bestimmung des Grads der Anhaftung und des Kraftprofils zusätzlich zur Bewegung der Bauplattform (1.2) in der vertikalen Bewegungsachse auch die Bewegung in der horizontalen Bewegungsachse.

### Trainingsdaten und das Trainieren des Neuronalen Netzes

Die Trainingsdaten werden mit einem 3D Drucker (Laborgerät) erzeugt, der zusätzlich eine Kraftmessungsvorrichtung zum Erfassen des Zeitpunkts des Ablösens des Bauteils und der auftretenden Kräfte beim Ablösen der jeweiligen Schicht aufweist. Die erfassten Daten in Kombination mit mindestens einer der folgenden Kenngrößen: (i) Eigenschaften des flüssigen photoreaktiven Harzes (1.3), (ii) der in der zuletzt belichteten Schicht (1.7) ausgehärteten Fläche (iii) der in der zuletzt ausgehärteten Fläche eingebrachten Energieverteilung werden zum Trainieren des neuronalen Netzes zur Verfügung gestellt. Das neuronale Netz wird anhand dieser Daten trainiert. Das Trainieren findet vorzugsweise in Verbindung mit einem Laborgerät statt.

### Verwendung des Neuronalen Netzes

Das trainierte neuronale Netz kann zur Steuerung eines 3D Druckers (1) (Seriengerät) verwendet werden, der keine Kraftmessungsvorrichtung aufweist. Das neuronale Netz kann vorab mit dem oben genannten Laborgerät trainiert werden. Das Seriengerät kann auch aus Sicherheitsgründen mit einer Kraftmessungsvorrichtung ausgestattet werden, die die auftretenden Kräfte misst bzw. somit auch Trainingsdaten sammelt. In einer alternativen bevorzugten Ausführungsform wird das neuronale Netz als Hardware und/oder Software implementiert. Die Software weist computerlesbaren Code auf, der von einem rechnergestützten 3D Drucker ausgeführt werden kann. Die Recheneinheit kann in den 3D Drucker integriert werden oder als ein separater Rechner bereitgestellt werden, der an dem 3D Drucker anschließbar ist. Die Software kann in einem Speichermedium in Verbindung mit dem 3D Drucker bereitgestellt werden.

## Patentansprüche

**1.** 3D Drucker (1) umfassend,
eine Wanne (1.1) mit einem mindestens teilweise transparenten Boden (1.2) zur Aufnahme von flüssigem photoreaktivem Harz (1.3) zur Herstellung eines festen Bauteils;
eine Bauplattform (1.8) zum Halten und schichtweisen Herausziehen des Bauteils aus der Wanne (1.1);
einen Projektor (1.4) zum Projizieren der Schichtgeometrie auf den transparenten Boden (1.2);
einen Transportapparat (1.5) zum mindestens Abwärts- und Aufwärtsbewegen der Bauplattform (1.8) in der Wanne (1.1); und
eine Steuerungsvorrichtung zum Steuern des Projektors (1.4) und des Transportapparats (1.5),
**gekennzeichnet dadurch, dass**
die Steuerungsvorrichtung die Abzugsbewegung der Bauplattform im 3D-Drucker mittels eines neuronalen Netzes optimal vorsteuert.

**2.** 3D Drucker (1) nach Anspruch 1, **gekennzeichnet dadurch, dass** das neuronale Netz den Grad der Anhaftung des Bauteils am transparenten Boden (1.2) durch mindestens eine der folgenden Kenngrößen bestimmt:
(i) Eigenschaften des flüssigem photoreaktiven Harzes (1.3) als Material,
(ii) der in der jeweils zuletzt belichteten Schicht (1.7) ausgehärteten Fläche,
(iii) der in der zuletzt ausgehärteten Fläche eingebrachten Energieverteilung, wobei die Steuerungsvorrichtung die Abzugsbewegung der Bauplattform im 3D-Drucker mittels des neuronalen Netzes auf Basis des bestimmten Grades der Anhaftung vorsteuert.

**3.** 3D Drucker (1) nach Anspruch 2, **gekennzeichnet dadurch, dass** das neuronale Netz bezüglich des Grads der Anhaftung ein Kraftprofil berechnet, wobei die Kraft in Abhängigkeit des zurückgelegten Hubes und/oder der Zeit angegeben wird, und wobei die Steuerungsvorrichtung die Abzugsbewegung der Bauplattform im 3D-Drucker mittels des neuronalen Netzes zusätzlich auf Basis des berechneten Kraftprofils vorsteuert.

**4.** 3D Drucker (1) nach einem der vorangegangenen Ansprüche 2 oder 3, **gekennzeichnet dadurch, dass** das neuronale Netz zusätzlich zur Bewegung der Bauplattform (1.2) in der vertikalen Bewegungsachse auch die Bewegung in der horizontalen Bewegungsachse berücksichtigt.

**5.** 3D Drucker (1) nach einem der vorangegangenen Ansprüche, **gekennzeichnet dadurch, dass** dieser eine Benutzeroberfläche aufweist zur Eingabe von Informationen über die Beschaffenheit oder den Typ des flüssigen photoreaktiven Harzes (1.3), das aktuell benutzt wird.

**6.** 3D Drucker (1) nach einem der vorangegangenen Ansprüche, **gekennzeichnet dadurch, dass** das neuronale Netz mit Daten, die den Zeitpunkt des Ablösens eines Bauteils und der auftretenden Kräfte beim Ablösen beschreiben, sowie mit mindestens einer der folgenden Kenngrößen: (i) Eigenschaften des flüssigen photoreaktiven Harzes (1.3) als Material, (ii) der in der zuletzt belichteten Schicht (1.7) ausgehärteten Fläche, (iii) der in der zuletzt ausgehärteten Fläche eingebrachten Energieverteilung umfassen, trainiert wurde, um dem neuronalen Netz die Vorhersage der mit diesem Material auftretenden Kräfte und Ablösezeitpunkte zu ermöglichen so dass das neuronale Netz dazu benutzt werden kann, die Abzugsbewegung zu optimieren.

**7.** 3D Drucker (1) nach einem der vorangegangenen Ansprüche 1 bis 5, **gekennzeichnet dadurch, dass** der 3D Drucker (1) eine Kraftmessungsvorrichtung zum Erfassen des Zeitpunktes des Ablösens des Bauteils und der auftretenden Kräfte beim Ablösen aufweist, und die erfassten Daten in Kombination mit mindestens einer der folgenden Kenngrößen: (i) Eigenschaften des flüssigen photoreaktiven Harzes (1.3) als Material, (ii) der in der zuletzt belichteten Schicht (1.7) ausgehärteten Fläche (ii) der in der zuletzt ausgehärteten Fläche eingebrachten Energieverteilung zum Trainieren des neuronalen Netzes zur Verfügung stellt, und das neuronalen Netz sich anhand dieser Daten trainiert bzw. weiter trainiert wird.

**9.** Neuronales Netz zur Steuerung eines 3D Druckers (1) umfassend
eine Wanne (1.1) mit einem mindestens teilweise transparenten Boden (1.2) zur Aufnahme von flüssigem photoreaktivem Harz (1.3) zur Herstellung eines festen Bauteils;
eine Bauplattform (1.8) zum Halten und schichtweisen Herausziehen des Bauteils aus der Wanne (1.1);
einen Projektor (1.4) zum Projizieren der Schichtgeometrie auf den transparenten Boden (1.2);
einen Transportapparat (1.5) zum mindestens Abwärts- und Aufwärtsbewegen der Bauplattform (1.8) in der Wanne (1.1); und
eine Steuerungsvorrichtung zum Steuern des Projektors (1.4) und des Transportapparats (1.5),
**gekennzeichnet dadurch, dass**
das neuronale Netz über die Steuerungsvorrichtung die Abzugsbewegung der Bauplattform im 3D-Drucker optimal vorsteuert.

**10.** Neuronales Netz nach Anspruch 9, **gekennzeichnet dadurch, dass** das neuronale Netz den Grad der Anhaftung des Bauteils am transparenten Boden (1.2) durch mindestens eine der folgenden Kenngrößen bestimmt:
(i) Eigenschaften des flüssigen photoreaktiven Harzes (1.3) als Material,
(ii) der in der zuletzt belichteten Schicht (1.7) ausgehärteten Fläche,
(iii) der in der zuletzt ausgehärteten Fläche eingebrachten Energieverteilung, wobei das neuronale Netzes über die Steuerungsvorrichtung die Abzugsbewegung der Bauplattform im 3D-Drucker auf Basis des bestimmten Grades der Anhaftung vorsteuert.

**11.** Neuronales Netz nach Anspruch 10, **gekennzeichnet dadurch, dass** das neuronale Netz bezüglich des Grads der Anhaftung ein Kraftprofil berechnet, wobei die Kraft in Abhängigkeit des zurückgelegten Hubes und/oder der Zeit angegeben wird, und wobei das neuronale Netz über die Steuerungsvorrichtung die Abzugsbewegung der Bauplattform im 3D-Drucker auf Basis des berechneten Kraftprofils vorsteuert.

**12.** Neuronales Netz nach einem der vorangegangenen Ansprüche 10 oder 11, **gekennzeichnet dadurch, dass** das neuronale Netz zusätzlich zur Bewegung der Bauplattform (1.2) in der vertikalen Bewegungsachse auch die Bewegung in der horizontalen Bewegungsachse berücksichtigt.

**13.** Neuronales Netz nach einem der vorangegangenen Ansprüche 9 bis 12, wobei der 3D Drucker (1) eine Benutzeroberfläche aufweist zur Eingabe von Informationen über die Beschaffenheit oder den Typ des flüssigen photoreaktiven Harzes (1.3), das aktuell benutzt wird, **gekennzeichnet dadurch, dass** das neuronalen Netz diese Eingabe berücksichtigt.

**14.** Neuronales Netz nach einem der vorangegangenen Ansprüche 9 bis 13, wobei der 3D Drucker (1) eine Kraftmessungsvorrichtung zum Erfassen des Zeitpunkt des Ablösens des Bauteils und in derjenigen Schicht auftretenden Kräfte beim Ablösen aufweist, und die erfassten Daten in Kombination mit mindestens einer der folgenden Kenngrößen: (i) Eigenschaften des flüssigen photoreaktiven Harzes (1.3) als Material, (ii) der in der zuletzt belichteten Schicht (1.7) ausgehärteten Fläche (iii) der in der zuletzt ausgehärteten Fläche eingebrachten Energieverteilung zum Trainieren des neuronalen Netzes zur Verfügung stellt, **gekennzeichnet dadurch, dass** das neuronale Netz anhand dieser Daten trainiert wird.

**15.** Neuronales Netz nach einem der vorangegangenen Ansprüche 9 bis 14, **gekennzeichnet dadurch, dass** dieses durch eine Hardware oder Software implementiert wird, wobei die Software computerlesbaren Code aufweist, der wenn dieser auf einem rechnergestützten 3D Drucker (1) ausgeführt wird, denselben veranlasst die Steuerungsvorrichtung entsprechend vorzusteuern.

**16.** Vorrichtung oder Speichermedium, **gekennzeichnet dadurch, dass** die Vorrichtung oder das Speichermedium jeweils die Hardware oder die Software nach Anspruch 15 aufweist.
